# EUROPEAN PATENT APPLICATION

(11) **EP 3 136 669 A1**
(43) Date of publication of application: **01.03.2017**
(21) Application number: 14891906.1
(22) Date of filing: 12.05.2014
(51) Int. Cl.: H04L 27/26

(54) **METHOD AND DEVICE FOR TRANSMITTING DATA BETWEEN BASE BAND UNIT (BBU) AND REMOTE RADIO UNIT (RRU)**

(71) Applicant: Huawei Technologies Co. Ltd., Shenzhen, Guangdong 518129 (CN)
(72) Inventor: SUN, Ke, Shenzhen Guangdong 518129 (CN); LIU, Yun, Shenzhen Guangdong 518129 (CN); LE, Chunhui, Shenzhen Guangdong 518129 (CN); XIA, Linfeng, Shenzhen Guangdong 518129 (CN); ZHANG, Chaochao, Shenzhen Guangdong 518129 (CN)
(74) Representative: Pfenning, Meinig & Partner mbB
(86) International application number: PCT/CN2014/077210
(87) International publication number: WO 2015/172277

(57) **Abstract**

The present invention discloses a method for transmitting data between a baseband processing unit BBU and a remote radio unit RRU, and a data transmission apparatus. The RRU selects partial data in received data, and sends the partial data to the BBU by using a common public interface CPRI; or the BBU performs only channel coding processing or only channel coding processing and constellation mapping processing on the data, and sends processed data to the RRU. Then the RRU performs constellation mapping processing, multiple-antenna multiple-input multiple-output MIMO coding processing, and orthogonal frequency division multiplexing OFDM symbol generation processing on the data, or the RRU performs MIMO coding processing and OFDM symbol generation processing on the data. That is, steps in which data redundancy is added are executed by the RRU, so that an amount of data transmitted by using the CPRI is greatly reduced. Therefore, a data transmission rate between the BBU and the RRU can be effectively reduced, which reduces costs of a transmission line between the BBU and the RRU.

## Description

### TECHNICAL FIELD

The present invention relates to the communications field, and in particular, to a method for transmitting data between a baseband processing unit and a remote radio unit, and a data transmission apparatus.

### BACKGROUND

In a distributed base station, a traditional macro base station device is divided into two function modules by function: a baseband unit (Base band Unit, BBU for short) and a remote radio unit (Remote Radio Unit, RRU for short). The BBU includes a baseband processing module, a main control module, a transmission module, a clock module, and the like. The RRU includes an intermediate frequency processing module, a transceiver module, a filter module, a power amplifier module, and the like.

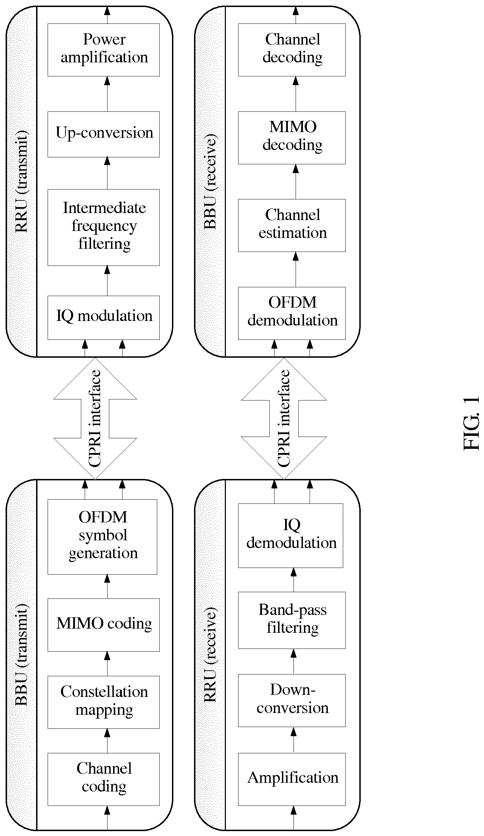

In the distributed base station, the BBU and the RRU are connected by using an optical fiber, a network cable, or another transmission medium, and transmit data by using a universal common public radio interface (Common Public Radio Interface, CPRI for short). Currently, a data receive and transmit structure of a base station is shown in FIG. 1. In downlink transmission, a baseband unit performs baseband processing on data, including channel coding, constellation mapping, multiple-antenna multiple-input multiple-output (Multiple-Input Multiple-Output, MIMO for short) coding, and orthogonal frequency division multiplexing (Orthogonal Frequency-Division Multiplexing, OFDM for short) symbol generation. The BBU sends the data to an RRU by using a CPRI interface, and the RRU performs intermediate radio frequency processing on the data, including intermediate frequency in-phase quadrature (in-phase quadrature, IQ for short) modulation, intermediate frequency filtering, up-conversion, and power amplification processing. In uplink reception, the RRU performs intermediate radio frequency processing on data, including signal amplification, down-conversion, band-pass filtering, and IQ demodulation. The RRU sends the data to the BBU by using the CPRI interface, and the BBU performs baseband processing on the data, including OFDM demodulation, channel estimation, MIMO decoding, and channel decoding.

In the prior art, for downlink transmission, a process of performing baseband processing on data is a process in which redundancy is added, and regardless of a downlink transmission process or an uplink reception process, in the prior art, data is compressed by performing all methods on the CPRI interface, such as information compression, signal bit width reduction, and down-sampling. However, currently, a compression ratio of information compression basically approaches its greatest limit, and there is limited space for further compression. Furthermore, with an increase of a wireless communications bandwidth, an increase of a quantity of receive and transmit antennas of a base station, sector subdivision, and wide application of a multimode co-site system, an amount of data transmitted by using the CPRI interface between the BBU and the RRU in the distributed base station is increasingly large, and a required data transmission rate is increasingly high. Therefore, a bandwidth of a transmission line between the BBU and the RRU is increasingly large, and costs are increasingly high.

### SUMMARY

Embodiments of the present invention provide a method for transmitting data between a baseband unit BBU and a remote radio unit RRU, and a data transmission apparatus, which can reduce an amount of data transmitted by using a CPRI interface between the BBU and the RRU, and further reduce costs of a transmission line between the BBU and the RRU.

According to a first aspect, a method for transmitting data between a baseband unit BBU and a remote radio unit RRU is provided, including: receiving, by the RRU, data by using N groups of receive antennas in the RRU; and selecting, by the RRU, partial data in the received data, and sending the partial data to the BBU by using a common public interface CPRI.

With reference to the first aspect, in a first possible implementation manner, the selecting, by the RRU, partial data in the received data, and sending the partial data to the BBU by using a common public interface CPRI includes: selecting, by the RRU, one group of receive antennas in the N groups of receive antennas, and sending, by using the CPRI, data received by the group of receive antennas to the BBU.

With reference to the first aspect, in a second possible implementation manner, the selecting, by the RRU, partial data in the received data, and sending the partial data to the BBU by using a common public interface CPRI includes: selecting, by the RRU, a pilot signal in the data received on the N groups of receive antennas, and sending the pilot signal to the BBU by using the CPRI; and selecting, by the RRU, one group of receive antennas in the N groups of receive antennas, and sending, by using the CPRI, a data signal in data received by the group of receive antennas to the BBU.

With reference to the first aspect, in a third possible implementation manner, the selecting, by the RRU, partial data in the received data, and sending the partial data to the BBU by using a common public interface CPRI includes: selecting, by the RRU in a polling manner, the partial data in the data received by the N groups of receive antennas, and sending the partial data to the BBU by using the CPRI.

With reference to the third possible implementation manner of the first aspect, in a fourth possible implementation manner, the method includes: sequentially numbering, by the RRU, the N groups of receive antennas starting from 0; grouping, by an integral quantity of data symbols, data signals in data received by each group of receive antennas, and sequentially numbering the groups starting from 0; grouping, by one pilot symbol, pilot signals in the data received by each group of receive antennas, and sequentially numbering the groups starting from 0; and when polling the N groups of receive antennas for an n^{th} time, selecting, by the RRU, an n^{th} group of data signals in data received by an m^{th} antenna group, sending the n^{th} group of data signals to the BBU by using the CPRI, selecting an n^{th} group of pilot signals in the data received by the m^{th} antenna group, and sending the n^{th} group of pilot signals to the BBU by using the CPRI, where m is a remainder obtained when n is divided by N, and the n^{th} time starts from a 0^{th} time.

With reference to the third possible implementation manner of the first aspect, in a fifth possible implementation manner, the method includes: selecting, by the RRU, a pilot signal in the data received by the N groups of receive antennas, and sending the pilot signal to the BBU by using the CPRI; sequentially numbering, by the RRU, the N groups of receive antennas starting from 0; grouping, by an integral quantity of data symbols, data signals in the data received on the N groups of receive antennas, and sequentially numbering the groups starting from 0; and when polling the N groups of receive antennas for an n^{th} time, selecting, by the RRU, an n^{th} group of data signals in data received by an m^{th} antenna group, and sending the n^{th} group of data signals to the BBU by using the CPRI.

According to a second aspect, another method for transmitting data between a baseband unit BBU and a remote radio unit RRU is provided, including: receiving, by the RRU by using a common public interface CPRI, downlink data sent by the BBU, where the data is data obtained after the BBU performs channel coding processing, or data obtained after the BBU performs channel coding processing and constellation mapping processing; and performing, by the RRU, modulation and intermediate radio frequency processing on the data.

With reference to the second aspect, in a first possible implementation manner, when the data is data obtained after the BBU performs channel coding processing, the performing, by the RRU, modulation on the data includes: performing, by the RRU, constellation mapping processing, multiple-antenna multiple-input multiple-output MIMO coding processing, and orthogonal frequency division multiplexing OFDM symbol generation processing on the data.

With reference to the second aspect, in a second possible implementation manner, when the data is data obtained after the BBU performs channel coding processing and constellation mapping processing, the performing, by the RRU, modulation on the data includes: performing, by the RRU, MIMO coding processing and OFDM symbol generation processing on the data.

According to a third aspect, a method for transmitting data between a baseband unit BBU and a remote radio unit RRU is provided, including: performing, by the BBU, channel coding processing on downlink data; and sending, by the BBU, the processed data to the RRU by using a common public interface CPRI, so that the RRU performs modulation and intermediate radio frequency processing on the data.

With reference to the third aspect, in a first possible implementation manner, after the performing, by the BBU, channel coding processing on downlink data, the method further includes: performing, by the BBU, constellation mapping processing on the downlink data, and the sending, by the BBU, the processed data to the RRU by using a common public interface CPRI is specifically: sending, by the BBU by using the common public interface CPRI, data obtained after the channel coding processing and the constellation mapping processing to the RRU.

According to a fourth aspect, a data transmission apparatus is provided, including: a receiving module, configured to receive data by using N groups of receive antennas in the apparatus; and a processing module, configured to select partial data in the received data, and send the partial data to a BBU by using a common public interface CPRI.

With reference to the fourth aspect, in a first possible implementation manner, that the processing module is configured to select the partial data in the received data, and send the partial data to the BBU by using the common public interface CPRI includes: the processing module is configured to select one group of receive antennas in the N groups of receive antennas, and send, by using the CPRI, data received by the group of receive antennas to the BBU.

With reference to the fourth aspect, in a second possible implementation manner, that the processing module is configured to select the partial data in the received data, and send the partial data to the BBU by using the common public interface CPRI includes: the processing module is configured to select a pilot signal in the data received on the N groups of receive antennas, and send the pilot signal to the BBU by using the CPRI; and the processing module is configured to select one group of receive antennas in the N groups of receive antennas, and send, by using the CPRI, a data signal in data received by the group of receive antennas to the BBU.

With reference to the fourth aspect, in a third possible implementation manner, that the processing module is configured to select the partial data in the received data, and send the partial data to the BBU by using the common public interface CPRI includes: the processing module is configured to select, in a polling manner, the partial data in the data received by the N groups of receive antennas, and send the partial data to the BBU by using the CPRI.

With reference to the third possible implementation manner of the fourth aspect, in a fourth possible implementation manner, that the processing module is configured to select, in a polling manner, the partial data in the data received by the N groups of receive antennas, and send the partial data to the BBU by using the CPRI includes: the processing module is configured to sequentially number the N groups of receive antennas starting from 0; group, by an integral quantity of data symbols, data signals in data received by each group of receive antennas, and sequentially number the groups starting from 0; group, by one pilot symbol, pilot signals in the data received by each group of receive antennas, and sequentially number the groups starting from 0; and the processing module is further configured to: when polling the N groups of receive antennas for an n^{th} time, select an n^{th} group of data signals in data received by an m^{th} antenna group, send the n^{th} group of data signals to the BBU by using the CPRI, select an n^{th} group of pilot signals in the data received by the m^{th} antenna group, and send the n^{th} group of pilot signals to the BBU by using the CPRI, where m is a remainder obtained when n is divided by N, and the n^{th} time starts from a 0^{th} time.

With reference to the third possible implementation manner of the fourth aspect, in a fifth possible implementation manner, that the processing module is configured to select, in a polling manner, the partial data in the data received by the N groups of receive antennas, and send the partial data to the BBU by using the CPRI includes: the processing module is configured to select a pilot signal in the data received by the N groups of receive antennas, and transmit the pilot signal to the BBU by using the CPRI; the processing module is further configured to sequentially number the N groups of receive antennas starting from 0, group, by an integral quantity of data symbols, data signals in the data received on the N groups of receive antennas, and sequentially number the groups starting from 0; and the processing module is further configured to: when polling the N groups of receive antennas for an n^{th} time, select an n^{th} group of data signals in data received by an m^{th} antennas group, and send the n^{th} group of data signals to the BBU by using the CPRI.

According to a fifth aspect, a data transmission apparatus is provided, including:
a receiving module, configured to receive, by using a common public interface CPRI, downlink data sent by a BBU, where the data is data obtained after the BBU performs channel coding processing, or data obtained after the BBU performs channel coding processing and constellation mapping processing; and a processing module, configured to perform modulation and intermediate radio frequency processing on the data.

With reference to the fifth aspect, in a first possible implementation manner, when the data is data obtained after the BBU performs channel coding processing, that the processing module is configured to perform modulation on the data includes: the processing module is configured to perform constellation mapping processing, multiple-antenna multiple-input multiple-output MIMO coding processing, and orthogonal frequency division multiplexing OFDM symbol generation processing on the data.

With reference to the fifth aspect, in a second possible implementation manner, when the data is data obtained after the BBU performs channel coding processing and constellation mapping processing, that the processing module is configured to perform modulation on the data includes: the processing module is configured to perform MIMO coding processing and OFDM symbol generation processing on the data.

According to a sixth aspect, a data transmission apparatus is provided, including: a processing module, configured to perform channel coding processing on downlink data; and a sending module, configured to send the processed data to an RRU by using a common public interface CPRI, so that the RRU performs modulation and intermediate radio frequency processing on the data.

With reference to the sixth aspect, in a first possible implementation manner, the processing module is further configured to perform constellation mapping processing on downlink data obtained after channel coding processing is performed, and that the sending module is configured to send the processed data to the RRU by using the common public interface CPRI is specifically: the sending module is configured to send data, obtained after the channel coding processing and the constellation mapping processing are performed, to the RRU by using the common public interface CPRI.

Based on the foregoing technical solutions, and according to the method for transmitting data between a baseband processing unit and a remote radio unit, and the data transmission apparatus, the RRU selects partial data in received data, and sends the partial data to the BBU by using a common public interface CPRI; or the BBU performs only channel coding processing or only channel coding processing and constellation mapping processing on the data, and sends processed data to the RRU. Then the RRU performs constellation mapping processing, multiple-antenna multiple-input multiple-output MIMO coding processing, and orthogonal frequency division multiplexing OFDM symbol generation processing on the data, or the RRU performs MIMO coding processing and OFDM symbol generation processing on the data. That is, steps in which data redundancy is added are executed by the RRU, so that an amount of data transmitted by using the CPRI is greatly reduced. Therefore, a data transmission rate between the BBU and the RRU can be effectively reduced, which reduces costs of a transmission line between the BBU and the RRU.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 shows a schematic diagram of a data receive and transmit structure of a base station;
FIG. 2 shows a schematic flowchart of a method for transmitting data between a baseband unit BBU and a remote radio unit RRU according to an embodiment of the present invention;
FIG. 3 shows a schematic block diagram of a method for transmitting data between a baseband unit BBU and a remote radio unit RRU according to an embodiment of the present invention;
FIG. 4 shows a schematic block diagram of a data transmission apparatus according to an embodiment of the present invention;
FIG. 5 shows a schematic block diagram of a data transmission apparatus according to an embodiment of the present invention;
FIG. 6 shows a schematic block diagram of a data transmission apparatus according to an embodiment of the present invention;
FIG. 7 shows a schematic block diagram of a data transmission apparatus according to an embodiment of the present invention;
FIG. 8 shows a schematic block diagram of a data transmission apparatus according to an embodiment of the present invention; and
FIG. 9 shows a schematic block diagram of a data transmission apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, for example, a Long Term Evolution (Long Term Evolution, "LTE" for short) system, and are also applicable to a wireless system that uses an OFDM-type multi-carrier technology, and the wireless system includes but is not limited to Worldwide Interoperability for Microwave Access (Worldwide Interoperability for Microwave Access, "WiMAX" for short), digital audio broadcasting (Digital Audio Broadcasting, "DAB" for short), digital video broadcasting (Digital Video Broadcasting, "DVB" for short), and a wireless local area network (Wireless Local Area Networks, "WLAN" for short).

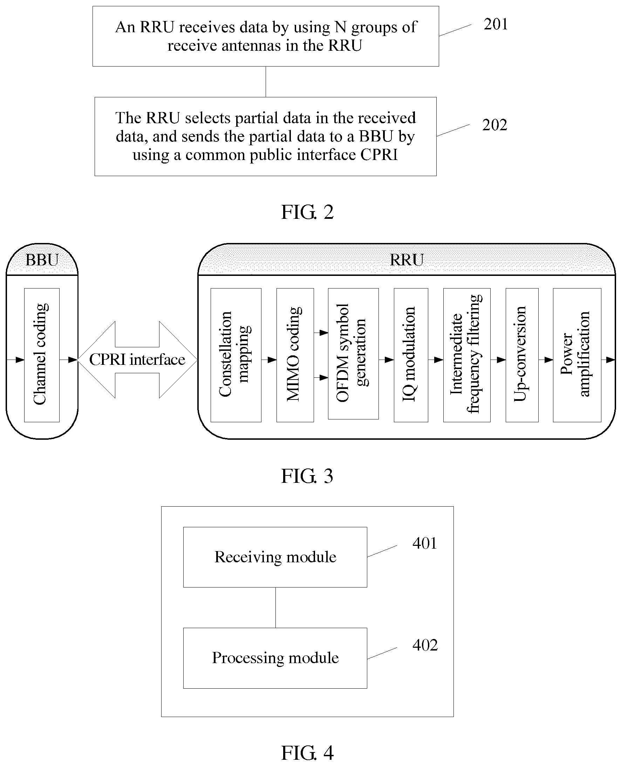

FIG. 2 shows a schematic flowchart of a method for transmitting data between a baseband unit BBU and a remote radio unit RRU according to an embodiment of the present invention. In this embodiment of the present invention, the RRU sends partial data in received data to the BBU by using a CPRI.

As shown in FIG. 2, the method includes:
S201. The RRU receives data by using N groups of receive antennas in the RRU.

Specifically, receive antennas in the RRU are grouped into N groups, where N is a positive integer greater than 1. Each of the N groups may include one or more receive antennas. This is not limited in the present invention.

S202. The RRU selects partial data in the received data, and sends the partial data to the BBU by using the common public interface CPRI.

It can be learned that, in the prior art, the RRU sends, by using the CPRI, all data received by the receive antennas to the BBU. By comparison, in this embodiment of the present invention, the RRU selects the partial data in the received data, and sends the partial data to the BBU by using the CPRI, so that an amount of data transmitted by using the CPRI is greatly reduced. Therefore, a data transmission rate between the BBU and the RRU can be effectively reduced, which reduces costs of a transmission line between the BBU and the RRU.

Specifically, the data may include a data signal and a pilot signal, where the data signal is formed by data symbols that may be data single-carrier frequency division multiple access (Single-carrier Frequency-Division Multiple Access, SC-FDMA for short) symbols in this embodiment of the present invention. This is not limited in the present invention. The pilot signal is formed by pilot symbols that may be pilot SC-FDMA symbols in this embodiment of the present invention. This is not limited in the present invention.

In an embodiment of the present invention, S202 may specifically include: the RRU selects one group of receive antennas in the N groups of receive antennas, and sends, by using the CPRI, data received by the group of receive antennas to the BBU. Actually, the data received by the N groups of receive antennas is different forms of data sent by a data source. Therefore, if data received by one group of antennas is transmitted to the BBU by using the CPRI, a case of data loss does not occur.

It can be learned that, in the prior art, the RRU transmits, by using the CPRI, data received by all receive antennas to the BBU. By comparison, in this embodiment of the present invention, the RRU transmits, by using the CPRI, data received by one group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

In another embodiment of the present invention, S202 may specifically include: the RRU selects a pilot signal in the data received on the N groups of receive antennas, and sends the pilot signal to the BBU by using the CPRI; and the RRU selects one group of receive antennas in the N groups of receive antennas, and sends, by using the CPRI, a data signal in data received by the group of receive antennas to the BBU. A manner in which the RRU selects one group of receive antennas in the N groups of receive antennas may be selected randomly, or may be selected according to a rule. This is not limited in the present invention.

The pilot signal in the data is mainly used for demodulation, and therefore, when the RRU transmits the pilot signal and some data signals to the BBU, integrity of data transmission can also be ensured.

It can be learned that, in the prior art, the RRU transmits, by using the CPRI, a pilot signal and data information in data received by all receive antennas to the BBU. By comparison, in this embodiment of the present invention, the RRU sends the pilot signal in the data received by the N groups of receive antennas to the BBU, and transmits a data signal in received data on one group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

In another embodiment of the present invention, S202 may specifically include: the RRU selects, in a polling manner, the partial data in the data received by the N groups of receive antennas, and sends the partial data to the BBU by using the CPRI.

That the RRU selects, in a polling manner, the partial data in the data received by the N groups of receive antennas, and sends the partial data to the BBU by using the CPRI may be specifically: the RRU sequentially numbers the N groups of receive antennas starting from 0; groups, by an integral quantity of data symbols, data signals in data received by each group of receive antennas, and sequentially numbers the groups starting from 0; groups, by one pilot symbol, pilot signals in the data received by each group of receive antennas, and sequentially numbers the groups starting from 0; when polling the N groups of receive antennas for an n^{th} time, the RRU selects an n^{th} group of data signals in data received by an m^{th} antenna group, and sends the n^{th} group of data signals to the BBU by using the CPRI, where each group of data signals is formed by an integral quantity of data symbols; the RRU selects an n^{th} group of pilot signals in the data received by the m^{th} antenna group, and sends the n^{th} group of pilot signals to the BBU by using the CPRI, where each group of pilot signals is formed by one pilot symbol, m is a remainder obtained when n is divided by N, and the n^{th} time starts from a 0^{th} time.

For example, it is assumed that there are three groups of receive antennas, and are respectively numbered 0, 1, and 2. When polling the three groups of receive antennas for a 0^{th} time, the RRU selects a 0^{th} group of data signals in data received by the 0^{th} (0 is a remainder obtained when 0 is divided by 3) group of receive antennas, sends, by using the CPRI, the 0^{th} group of data signals in the data received by the 0^{th} group of receive antennas to the BBU, and sends, by using the CPRI, a 0^{th} group of pilot signals in the data received by the 0^{th} group of receive antennas to the BBU. When polling the three groups of receive antennas for a first time, the RRU selects a first group of data signals in data received by the first (1 is a remainder obtained when 1 is divided by 3) group of receive antennas, sends, by using the CPRI, the first group of data signals in the data received by the first group of receive antennas to the BBU, and sends, by using the CPRI, a first group of pilot signals in the data received by the first group of receive antennas to the BBU. When polling the three groups of receive antennas for a second time, the RRU selects a second group of data signals in data received by the second (2 is a remainder obtained when 2 is divided by 3) group of receive antennas, sends, by using the CPRI, the second group of data signals in the data received by the second group of receive antennas to the BBU, and sends, by using the CPRI, a second group of pilot signals in the data received by the second group of receive antennas to the BBU. When polling the three groups of receive antennas for a third time, the RRU sends a third group of data signals in data received by the 0^{th} (0 is a remainder obtained when 3 is divided by 3) group of receive antennas to the BBU, and sends, by using the CPRI, a third group of pilot signals in data received by the third group of receive antennas to the BBU. When polling the three groups of receive antennas for a fourth time, the RRU sends a fourth group of data signals in data received by the first (1 is a remainder obtained when 4 is divided by 3) group of receive antennas to the BBU, and sends, by using the CPRI, a fourth group of pilot signals in the data received by the first group of receive antennas to the BBU, and so on.

It can be learned that, in the prior art, the RRU sends, by using the CPRI, a pilot signal and a data signal in data received by all receive antennas to the BBU. By comparison, in this embodiment of the present invention, the RRU sends some data symbols and some pilot symbols in data received by each group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

Alternatively, that the RRU selects, in a polling manner, the partial data in the data received by the N groups of receive antennas, and sends the partial data to the BBU by using the CPRI may be specifically: the RRU selects a pilot signal in the data received by the N groups of receive antennas, and sends the pilot signal to the BBU by using the CPRI; the RRU sequentially numbers the N groups of receive antennas starting from 0; groups, by an integral quantity of data symbols, data signals in the data received on the N groups of receive antennas, and sequentially numbers the groups starting from 0; and when polling the N groups of receive antennas for an n^{th} time, the RRU selects an n^{th} group of data signals in data received by an m^{th} antenna group, and sends the n^{th} group of data signals to the BBU by using the CPRI, where each group of data signals is formed by an integral quantity of data symbols. A processing manner of a data signal in the received data in this manner is consistent with that in the previous manner.

It can be learned that, in the prior art, the RRU transmits, by using the CPRI, a pilot signal and a data signal in data received by all receive antennas to the BBU. By comparison, in this embodiment of the present invention, the RRU sends some data symbols and all pilot symbols in data received by each group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

FIG. 3 shows a schematic block diagram of a method for transmitting data between a baseband unit BBU and a remote radio unit RRU according to an embodiment of the present invention.

As shown in FIG. 3, the method embodiment includes:
1. The BBU performs channel coding processing on downlink data.
   A channel coding process specifically includes: cyclic redundancy check (Cyclic Redundancy Check, CRC for short) to which a transmission block is added, code block segmentation, CRC to which a code block is added, channel coding, rate matching, code block concatenation, bit scrambling, and interleaving.
   Alternatively, the BBU may perform channel coding processing and constellation mapping on downlink data, where a constellation mapping process includes processing of mapping a bit to a constellation diagram, and a MIMO coding process includes spatial layer mapping, precoding, or beamforming (Beamforming, BF for short).
   Currently, a BBU performs channel coding, constellation mapping, multiple-antenna multiple-input multiple-output MIMO coding, and orthogonal frequency division multiplexing OFDM symbol generation on downlink data. These data processing manners are processes in which data redundancy is added. In this embodiment of the present invention, the BBU performs only channel coding or only channel coding and constellation mapping on the downlink data, and the other processing steps in which data redundancy is added are completed by an RRU, so that an amount of data transmitted by using a CPRI is greatly reduced. Therefore, a data transmission rate between the BBU and the RRU can be effectively reduced, which reduces costs of a transmission line between the BBU and the RRU.
2. The BBU sends the processed data to the RRU by using a CPRI.
   That the BBU sends data to the RRU by using the CPRI may be specifically that, the BBU sends, by using the CPRI, data obtained after channel coding processing to the RRU, or the BBU sends, by using the CPRI, data obtained after channel coding processing and constellation mapping processing to the RRU.
3. The RRU performs modulation and intermediate radio frequency processing on the data.

If the data is data obtained after the BBU performs channel coding processing,
that the RRU performs modulation on the data is specifically that, the RRU performs constellation mapping, multiple-antenna multiple-input multiple-output MIMO coding, and orthogonal frequency division multiplexing OFDM symbol generation on the data.

That the RRU performs intermediate radio frequency processing on the data is specifically that, the RRU performs IQ modulation, intermediate frequency filtering, up-conversion, and power amplification processing on the data.

Alternatively, when a base station implements downlink transmission, the BBU performs channel coding processing and constellation mapping on the data. The BBU transmits processed data to the RRU by using the CPRI, and the RRU performs modulation and intermediate radio frequency processing on the data, that is, when the data is data obtained after the BBU performs channel coding processing and constellation mapping processing, that the RRU performs modulation on the data includes that the RRU performs modulation on the data is specifically that, the RRU performs multiple-antenna multiple-input multiple-output MIMO coding and orthogonal frequency division multiplexing OFDM symbol generation on the data.

The BBU performs baseband processing on the data by using an internal field programmable gate array (Field Programmable Gate Array, FPGA for short) chip, such as channel coding processing, constellation mapping processing, MIMO coding processing, and OFDM symbol generation processing; and the RRU also includes an FPGA chip, so that the RRU can also perform a baseband processing operation on the data, such as performing constellation mapping processing, MIMO coding processing, and OFDM symbol generation processing on the data.

Therefore, based on a method for transmitting a small amount of data between a baseband unit BBU and a remote radio unit RRU in this embodiment of the present invention, the BBU performs only channel coding processing on data, and transmits data, obtained after channel coding processing is performed, to the RRU by using a CPRI; the RRU performs modulation processing that is performed originally by the BBU; then the RRU performs intermediate radio frequency processing on the data. Alternatively, the BBU performs channel coding processing and constellation mapping processing on data, and transmits data, obtained after channel coding processing is performed, to the RRU by using a CPRI; the RRU performs modulation processing that is originally performed by the BBU; then the RRU performs intermediate radio frequency processing on the data. Modulation processing that is originally performed by the BBU on the data is a process in which redundancy is added, and currently some steps in this process are performed after the data is transmitted to the RRU, so that an amount of data transmitted by using the CPRI is greatly reduced. Therefore, a data transmission rate between the BBU and the RRU can be effectively reduced, which reduces costs of a transmission line between the BBU and the RRU.

FIG. 4 shows a schematic block diagram of a data transmission apparatus according to an embodiment of the present invention. The apparatus may be a baseband unit BBU, but the present invention is not limited thereto. The apparatus provided in this embodiment of the present invention may use the method provided in the embodiment of the present invention shown in FIG. 2.

As shown in FIG. 4, the data transmission apparatus includes a receiving module 401 and a processing module 402.

The receiving module 401 is configured to receive data by using N groups of receive antennas in the apparatus.

Specifically, receive antennas in the apparatus are grouped into N groups, where N is a positive integer greater than 1. Each of the N groups may include one or more receive antennas. This is not limited in the present invention.

The processing module 402 is configured to select partial data in the received data, and send the partial data to a BBU by using a common public interface CPRI.

It can be learned that, in the prior art, the RRU sends, by using the CPRI, all data received by the receive antennas to the BBU. By comparison, in this embodiment of the present invention, the RRU selects the partial data in the received data, and sends the partial data to the BBU by using the CPRI, so that an amount of data transmitted by using the CPRI is greatly reduced. Therefore, a data transmission rate between the BBU and the RRU can be effectively reduced, which reduces costs of a transmission line between the BBU and the RRU.

In an embodiment of the present invention, the processing module 402 may be configured to select one group of receive antennas in the N groups of receive antennas, and send, by using the CPRI, data received by the group of receive antennas to the BBU.

It can be learned that, in the prior art, the RRU transmits, by using the CPRI, data received by all receive antennas to the BBU. By comparison, in this embodiment of the present invention, the RRU sends, by using the CPRI, data received by one group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

In another embodiment of the present invention, the processing module 402 may be configured to select a pilot signal in the data received on the N groups of receive antennas, and send the pilot signal to the BBU by using the CPRI; and the processing module 402 may be configured to select one group of receive antennas in the N groups of receive antennas, and send, by using the CPRI, a data signal in data received by the group of receive antennas to the BBU. A manner in which the processing module 402 selects one group of receive antennas in the N groups of receive antennas may be selected randomly, or may be selected according to a rule. This is not limited in the present invention.

It can be learned that, in the prior art, the RRU transmits, by using the CPRI, a pilot signal and data information in data received by all receive antennas to the BBU. By comparison, in this embodiment of the present invention, the RRU sends the pilot signal in the data received by the N groups of receive antennas to the BBU, and transmits a data signal in received data on one group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

In another embodiment of the present invention, the processing module 402 is configured to select, in a polling manner, the partial data in the data received by the N groups of receive antennas, and send the partial data to the BBU by using the CPRI.

That the processing module 402 is configured to select, in a polling manner, the partial data in the data received by the N groups of receive antennas, and send the partial data to the BBU by using the CPRI may be specifically: the processing module 402 is configured to sequentially number the N groups of receive antennas starting from 0; group, by an integral quantity of data symbols, data signals in data received by each group of receive antennas, and sequentially number the groups starting from 0; group, by one pilot symbol, pilot signals in the data received by each group of receive antennas, and sequentially number the groups starting from 0; and the processing module 402 is further configured to: when polling the N groups of receive antennas for an n^{th} time, select an n^{th} group of data signals in data received by an m^{th} antenna group, send the n^{th} group of data signals to the BBU by using the CPRI, select an n^{th} pilot signal in the data received by the m^{th} antenna group, and send the n^{th} group of pilot signals to the BBU by using the CPRI, where m is a remainder obtained when n is divided by N, and the n^{th} time starts from a 0^{th} time. For a specific example, refer to the example in the embodiment of the present invention shown in FIG. 2.

It can be learned that, in the prior art, the RRU transmits, by using the CPRI, a pilot signal and a data signal in data received by all receive antennas to the BBU. By comparison, in this embodiment of the present invention, the RRU sends some data symbols and some pilot symbols in data received by each group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

Alternatively, that the processing module 402 is configured to select, in a polling manner, the partial data in the data received by the N groups of receive antennas, and send the partial data to the BBU by using the CPRI may be specifically: the processing module 402 is configured to select a pilot signal in the data received by the N groups of receive antennas, and transmit the pilot signal to the BBU by using the CPRI; the processing module 402 is further configured to sequentially number the N groups of receive antennas starting from 0, group, by an integral quantity of data symbols, data signals in the data received on the N groups of receive antennas, and sequentially number the groups starting from 0; and the processing module 402 is further configured to: when polling the N groups of receive antennas for an n^{th} time, select an n^{th} group of data signals in data received by an m^{th} antenna group, and send the n^{th} group of data signals to the BBU by using the CPRI.

It can be learned that, in the prior art, the RRU transmits, by using the CPRI, a pilot signal and a data signal in data received by all receive antennas to the BBU. By comparison, in this embodiment of the present invention, the RRU sends some data symbols and all pilot symbols in data received by each group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

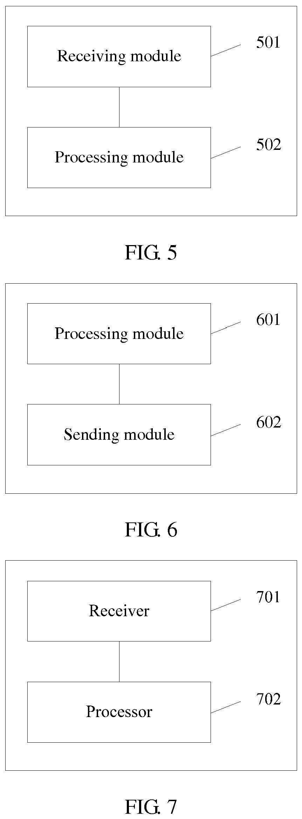

FIG. 5 shows a schematic block diagram of a data transmission apparatus according to an embodiment of the present invention. The apparatus may be a remote radio unit RRU, but the present invention is not limited thereto. The apparatus provided in this embodiment of the present invention may use the method provided in the embodiment of the present invention shown in FIG. 3.

As shown in FIG. 5, the data transmission apparatus includes:
a receiving module 501, configured to receive, by using a common public interface CPRI, downlink data sent by a BBU, where the data is data obtained after the BBU performs channel coding processing, or data obtained after the BBU performs channel coding processing and constellation mapping processing; and
a processing module 502, configured to perform modulation and intermediate radio frequency processing on the data.

When the data is data obtained after the BBU performs channel coding processing, that the processing module 502 is configured to perform modulation on the data includes: that the processing module 502 is specifically configured to perform modulation on the data is specifically that, the RRU performs constellation mapping, multiple-antenna multiple-input multiple-output MIMO coding, and orthogonal frequency division multiplexing OFDM symbol generation on the data. That the processing module 502 is configured to perform intermediate radio frequency processing on the data includes: the processing module 502 is specifically configured to perform IQ modulation, intermediate frequency filtering, up-conversion, and power amplification processing on the data.

Optionally, if the data received by the receiving module 501 is data obtained after the BBU performs channel coding processing and constellation mapping processing, that the processing module 502 is configured to perform modulation on the data includes: the processing module 502 is specifically configured to perform multiple-antenna multiple-input multiple-output MIMO coding and orthogonal frequency division multiplexing OFDM symbol generation on the data.

Therefore, based on the data transmission apparatus in this embodiment of the present invention, a BBU performs only channel coding processing on data, and transmits data, obtained after channel coding processing is performed, to an RRU by using a CPRI; the RRU performs modulation processing that is originally performed by the BBU; then the RRU performs intermediate radio frequency processing on the data. Alternatively, a BBU performs channel coding processing and constellation mapping processing on data, and transmits data, obtained after channel coding processing is performed, to an RRU by using a CPRI; the RRU performs modulation processing that is originally performed by the BBU; then the RRU performs intermediate radio frequency processing on the data. Modulation processing that is originally performed by the BBU on the data is a process in which redundancy is added, and currently some steps in this process are performed after the data is transmitted to the RRU, so that an amount of data transmitted by using the CPRI is greatly reduced. Therefore, a data transmission rate between the BBU and the RRU can be effectively reduced, which reduces costs of a transmission line between the BBU and the RRU.

FIG. 6 shows a schematic block diagram of a data transmission apparatus according to an embodiment of the present invention. The apparatus may be a BBU, but the present invention is not limited thereto. The apparatus provided in this embodiment of the present invention may use the method provided in the embodiment of the present invention shown in FIG. 3.

As shown in FIG. 6, the data transmission apparatus includes:
a processing module 601, configured to perform channel coding processing on downlink data; and
a sending module 602, configured to send the processed data to an RRU by using a common public interface CPRI, so that the RRU performs modulation and intermediate radio frequency processing on the data.

Optionally, the processing module 601 is further configured to perform constellation mapping processing on downlink data obtained after channel coding processing is performed, and that the sending module 602 is configured to send the processed data to the RRU by using the common public interface CPRI is specifically: the sending module 602 is configured to send data, obtained after the channel coding processing and the constellation mapping processing are performed, to the RRU by using the common public interface CPRI.

Currently, a BBU performs channel coding, constellation mapping, multiple-antenna multiple-input multiple-output MIMO coding, and orthogonal frequency division multiplexing OFDM symbol generation on downlink data. These data processing manners are processes in which data redundancy is added. In this embodiment of the present invention, the BBU performs only channel coding or only channel coding and constellation mapping on the downlink data, and the other processing steps in which data redundancy is added are completed by an RRU, so that an amount of data transmitted by using a CPRI is greatly reduced. Therefore, a data transmission rate between the BBU and the RRU can be effectively reduced, which reduces costs of a transmission line between the BBU and the RRU.

FIG. 7 shows a schematic block diagram of a data transmission apparatus according to an embodiment of the present invention. The apparatus may be a baseband unit BBU, but the present invention is not limited thereto. The apparatus provided in this embodiment of the present invention may use the method provided in the embodiment of the present invention shown in FIG. 2.

As shown in FIG. 7, the data transmission apparatus includes a receiver 701 and a processor 702.

The receiver 701 is configured to receive data by using N groups of receive antennas in the apparatus.

Specifically, receive antennas in the apparatus are grouped into N groups, where N is a positive integer greater than 1. Each of the N groups may include one or more receive antennas. This is not limited in the present invention.

The processor 702 is configured to select partial data in the received data, and send the partial data to a BBU by using a common public interface CPRI.

It can be learned that, in the prior art, the RRU sends, by using the CPRI, all data received by the receive antennas to the BBU. By comparison, in this embodiment of the present invention, the RRU selects the partial data in the received data, and sends the partial data to the BBU by using the CPRI, so that an amount of data transmitted by using the CPRI is greatly reduced. Therefore, a data transmission rate between the BBU and the RRU can be effectively reduced, which reduces costs of a transmission line between the BBU and the RRU.

In an embodiment of the present invention, the processor 702 may be configured to select one group of receive antennas in the N groups of receive antennas, and send, by using the CPRI, data received by the group of receive antennas to the BBU.

It can be learned that, in the prior art, the RRU transmits, by using the CPRI, data received by all receive antennas to the BBU. By comparison, in this embodiment of the present invention, the RRU transmits, by using the CPRI, data received by one group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

In another embodiment of the present invention, the processor 702 may be configured to select a pilot signal in the data received on the N groups of receive antennas, and send the pilot signal to the BBU by using the CPRI; and the processor 702 may be configured to select one group of receive antennas in the N groups of receive antennas, and send, by using the CPRI, a data signal in data received by the group of receive antennas to the BBU. A manner in which the processor 702 selects one group of receive antennas in the N groups of receive antennas may be selected randomly, or may be selected according to a rule. This is not limited in the present invention.

It can be learned that, in the prior art, the RRU transmits, by using the CPRI, a pilot signal and data information in data received by all receive antennas to the BBU. By comparison, in this embodiment of the present invention, the RRU sends the pilot signal in the data received by the N groups of receive antennas to the BBU, and transmits a data signal in received data on one group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

In another embodiment of the present invention, the processor 702 is configured to select, in a polling manner, the partial data in the data received by the N groups of receive antennas, and send the partial data to the BBU by using the CPRI.

That the processor 702 is configured to select, in a polling manner, the partial data in the data received by the N groups of receive antennas, and send the partial signal to the BBU by using the CPRI may be specifically: the processor 702 is configured to sequentially number the N groups of receive antennas starting from 0; group, by an integral quantity of data symbols, data signals in data received by each group of receive antennas, and sequentially number the groups starting from 0; group, by one pilot symbol, pilot signals in the data received by each group of receive antennas, and sequentially number the groups starting from 0; and the processor 702 is further configured to: when polling the N groups of receive antennas for an n^{th} time, select an n^{th} group of data signals in data received by an m^{th} antenna group, send the n^{th} group of data signals to the BBU by using the CPRI, select an n^{th} group of pilot signals in the data received by the m^{th} antenna group, and send the n^{th} group of pilot signals to the BBU by using the CPRI, where m is a remainder obtained when n is divided by N, and the n^{th} time starts from a 0^{th} time. For a specific example, refer to the example in the embodiment of the present invention shown in FIG. 2.

It can be learned that, in the prior art, the RRU transmits, by using the CPRI, a pilot signal and a data signal in data received by all receive antennas to the BBU. By comparison, in this embodiment of the present invention, the RRU sends some data symbols and some pilot symbols in data received by each group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

Alternatively, that the processor 702 is configured to select, in a polling manner, the partial data in the data received by the N groups of receive antennas, and send the partial data to the BBU by using the CPRI may be specifically: the processor 702 is configured to select a pilot signal in the data received by the N groups of receive antennas, and transmit the pilot signal to the BBU by using the CPRI; the processor 702 is further configured to sequentially number the N groups of receive antennas starting from 0, group, by an integral quantity of data symbols, data signals in the data received on the N groups of receive antennas, and sequentially number the groups starting from 0; and the processor 702 is further configured to: when polling the N groups of receive antennas for an n^{th} time, select an n^{th} group of data signals in data received by an m^{th} antenna group, and send the n^{th} group of data signals to the BBU by using the CPRI.

It can be learned that, in the prior art, the RRU transmits, by using the CPRI, a pilot signal and a data signal in data received by all receive antennas to the BBU. By comparison, in this embodiment of the present invention, the RRU sends some data symbols and all pilot symbols in data received by each group of receive antennas in the N groups of receive antennas to the BBU, so that an amount of data transmitted by using the CPRI is greatly reduced. Therefore, a data transmission rate between the BBU and the RRU can be effectively reduced, which reduces costs of a transmission line between the BBU and the RRU.

It should be understood that, in this embodiment of the present invention, the processor may be a central processing unit (Central Processing Unit, "CPU" for short), or the processor may be another general-purpose processor, a digital signal processor (DSP), an application-specific integrated circuit (ASIC), a field programmable gate array (FPGA), another programmable logic device, a discrete gate or transistor logic device, a discrete hardware assembly, or the like. The general-purpose processor may be a micro-processor, or the processor may be any conventional processor or the like.

In an implementation process, the foregoing steps can be implemented by using a hardware integrated logical circuit in the processor, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

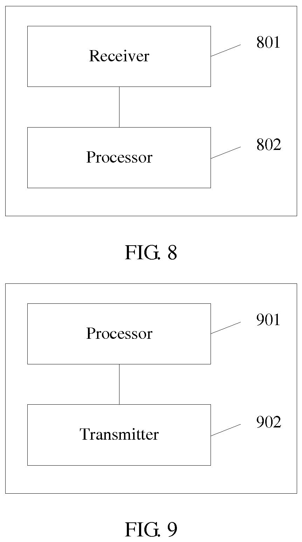

FIG. 8 shows a schematic block diagram of a data transmission apparatus according to an embodiment of the present invention. The apparatus may be a remote radio unit RRU, but the present invention is not limited thereto. The apparatus provided in this embodiment of the present invention may use the method provided in the embodiment of the present invention shown in FIG. 3.

As shown in FIG. 8, the data transmission apparatus includes:
a receiver 801, configured to receive, by using a common public interface CPRI, downlink data sent by a BBU, where the data is data obtained after the BBU performs channel coding processing, or data obtained after the BBU performs channel coding processing and constellation mapping processing; and
a processor 802, configured to perform modulation and intermediate radio frequency processing on the data.

When the data is data obtained after the BBU performs channel coding processing, that the processor 802 is configured to perform modulation on the data includes: that the processor 802 is specifically configured to perform modulation on the data is specifically that, the RRU performs constellation mapping, multiple-antenna multiple-input multiple-output MIMO coding, and orthogonal frequency division multiplexing OFDM symbol generation on the data. That the processor 802 is configured to perform intermediate radio frequency processing on the data includes: the processor 802 is specifically configured to perform IQ modulation, intermediate frequency filtering, up-conversion, and power amplification processing on the data.

Optionally, if the data received by the receiver 801 is data obtained after the BBU performs channel coding processing and constellation mapping processing, that the processor 802 is configured to perform modulation on the data includes: the processor 802 is specifically configured to perform multiple-antenna multiple-input multiple-output MIMO coding and orthogonal frequency division multiplexing OFDM symbol generation on the data.

Therefore, based on the data transmission apparatus in this embodiment of the present invention, a BBU performs only channel coding processing on data, and transmits data, obtained after channel coding processing is performed, to an RRU by using a CPRI; the RRU performs modulation processing that is originally performed by the BBU; then the RRU performs intermediate radio frequency processing on the data. Alternatively, a BBU performs channel coding processing and constellation mapping processing on data, and transmits data, obtained after channel coding processing is performed, to an RRU by using a CPRI; the RRU performs modulation processing that is originally performed by the BBU; then the RRU performs intermediate radio frequency processing on the data. Modulation processing that is originally performed by the BBU on the data is a process in which redundancy is added, and currently some steps in this process are performed after the data is transmitted to the RRU, so that an amount of data transmitted by using the CPRI is greatly reduced. Therefore, a data transmission rate between the BBU and the RRU can be effectively reduced, which reduces costs of a transmission line between the BBU and the RRU.

It should be understood that, in this embodiment of the present invention, the processor may be a central processing unit (Central Processing Unit, "CPU" for short), or the processor may be another general-purpose processor, a digital signal processor (DSP), an application-specific integrated circuit (ASIC), a field programmable gate array (FPGA), another programmable logic device, a discrete gate or transistor logic device, a discrete hardware assembly, or the like. The general-purpose processor may be a micro-processor, or the processor may be any conventional processor or the like.

In an implementation process, the foregoing steps can be implemented by using a hardware integrated logical circuit in the processor, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

FIG. 9 shows a schematic block diagram of a data transmission apparatus according to an embodiment of the present invention. The apparatus may be a BBU, but the present invention is not limited thereto. The apparatus provided in this embodiment of the present invention may use the method provided in the embodiment of the present invention shown in FIG. 3.

As shown in FIG. 9, the data transmission apparatus includes:
a processor 901, configured to perform channel coding processing on downlink data; and
a transmitter 902, configured to send the processed data to an RRU by using a common public interface CPRI, so that the RRU performs modulation and intermediate radio frequency processing on the data.

Optionally, the processor 901 may be further configured to perform constellation mapping processing on downlink data obtained after channel coding processing is performed, and that the sending module is configured to send the processed data to the RRU by using the common public interface CPRI is specifically: the sending module is configured to send data, obtained after the channel coding processing and the constellation mapping processing are performed, to the RRU by using the common public interface CPRI.

Currently, a BBU performs channel coding, constellation mapping, multiple-antenna multiple-input multiple-output MIMO coding, and orthogonal frequency division multiplexing OFDM symbol generation on downlink data. These data processing manners are processes in which data redundancy is added. In this embodiment of the present invention, the BBU performs only channel coding or only channel coding and constellation mapping on the downlink data, and the other processing steps in which data redundancy is added are completed by an RRU, so that an amount of data transmitted by using a CPRI is greatly reduced. Therefore, a data transmission rate between the BBU and the RRU can be effectively reduced, which reduces costs of a transmission line between the BBU and the RRU.

It should be understood that, in this embodiment of the present invention, the processor may be a central processing unit (Central Processing Unit, "CPU" for short), or the processor may be another general-purpose processor, a digital signal processor (DSP), an application-specific integrated circuit (ASIC), a field programmable gate array (FPGA), another programmable logic device, a discrete gate or transistor logic device, a discrete hardware assembly, or the like. The general-purpose processor may be a micro-processor, or the processor may be any conventional processor or the like.

In an implementation process, the foregoing steps can be implemented by using a hardware integrated logical circuit in the processor, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

## Claims

1. A method for transmitting data between a baseband unit BBU and a remote radio unit RRU, comprising:
receiving, by the RRU, data by using N groups of receive antennas in the RRU; and
selecting, by the RRU, partial data in the received data, and sending the partial data to the BBU by using a common public interface CPRI.

2. The method according to claim 1, wherein the selecting, by the RRU, partial data in the received data, and sending the partial data to the BBU by using a common public interface CPRI comprises:
selecting, by the RRU, one group of receive antennas in the N groups of receive antennas, and sending, by using the CPRI, data received by the group of receive antennas to the BBU.

3. The method according to claim 1, wherein the selecting, by the RRU, partial data in the received data, and sending the partial data to the BBU by using a common public interface CPRI comprises:
selecting, by the RRU, a pilot signal in the data received on the N groups of receive antennas, and sending the pilot signal to the BBU by using the CPRI; and selecting, by the RRU, one group of receive antennas in the N groups of receive antennas, and sending, by using the CPRI, a data signal in data received by the group of receive antennas to the BBU.

4. The method according to claim 1, wherein the selecting, by the RRU, partial data in the received data, and sending the partial data to the BBU by using a common public interface CPRI comprises:
selecting, by the RRU in a polling manner, the partial data in the data received by the N groups of receive antennas, and sending the partial data to the BBU by using the CPRI.

5. The method according to claim 4, wherein the selecting, by the RRU in a polling manner, the partial data in the data received by the N groups of receive antennas, and sending the partial data to the BBU by using the CPRI comprises:
sequentially numbering, by the RRU, the N groups of receive antennas starting from 0; grouping, by an integral quantity of data symbols, data signals in data received by each group of receive antennas, and sequentially numbering the groups starting from 0; and grouping, by one pilot symbol, pilot signals in the data received by each group of receive antennas, and sequentially numbering the groups starting from 0; and
when polling the N groups of receive antennas for an n^{th} time, selecting, by the RRU, an n^{th} group of data signals in data received by an m^{th} antenna group, sending the n^{th} group of data signals to the BBU by using the CPRI, selecting an n^{th} group of pilot signals in the data received by the m^{th} antenna group, and sending the n^{th} group of pilot signals to the BBU by using the CPRI, wherein
m is a remainder obtained when n is divided by N, and the n^{th} time starts from a 0^{th} time.

6. The method according to claim 4, wherein the selecting, by the RRU in a polling manner, the partial data in the data received by the N groups of receive antennas, and sending the partial data to the BBU by using the CPRI comprises:
selecting, by the RRU, a pilot signal in the data received by the N groups of receive antennas, and sending the pilot signal to the BBU by using the CPRI;
sequentially numbering, by the RRU, the N groups of receive antennas starting from 0; and grouping, by an integral quantity of data symbols, data signals in the data received on the N groups of receive antennas, and sequentially numbering the groups starting from 0; and
when polling the N groups of receive antennas for an n^{th} time, selecting, by the RRU, an n^{th} group of data signals in data received by an m^{th} antenna group, and sending the n^{th} group of data signals to the BBU by using the CPRI.

7. A method for transmitting data between a baseband unit BBU and a remote radio unit RRU, comprising:
receiving, by the RRU by using a common public interface CPRI, downlink data sent by the BBU, wherein the data is data obtained after the BBU performs channel coding processing, or data obtained after the BBU performs channel coding processing and constellation mapping processing; and
performing, by the RRU, modulation and intermediate radio frequency processing on the data.

8. The method according to claim 7, wherein when the data is data obtained after the BBU performs channel coding processing,
the performing, by the RRU, modulation on the data comprises:
performing, by the RRU, constellation mapping processing, multiple-antenna multiple-input multiple-output MIMO coding processing, and orthogonal frequency division multiplexing OFDM symbol generation processing on the data.

9. The method according to claim 7, wherein when the data is data obtained after the BBU performs channel coding processing and constellation mapping processing,
the performing, by the RRU, modulation on the data comprises:
performing, by the RRU, MIMO coding processing and OFDM symbol generation processing on the data.

10. A method for transmitting data between a baseband unit BBU and a remote radio unit RRU, comprising:
performing, by the BBU, channel coding processing on downlink data; and
sending, by the BBU, the processed data to the RRU by using a common public interface CPRI, so that the RRU performs modulation and intermediate radio frequency processing on the data.

11. The method according to claim 10, wherein after the performing, by the BBU, channel coding processing on downlink data, the method further comprises:
performing, by the BBU, constellation mapping processing on the downlink data; and
the sending, by the BBU, the processed data to the RRU by using a common public interface CPRI is specifically: sending, by the BBU by using the common public interface CPRI, data obtained after the channel coding processing and the constellation mapping processing to the RRU.

12. A data transmission apparatus, comprising:
a receiving module, configured to receive data by using N groups of receive antennas in the apparatus; and
a processing module, configured to select partial data in the received data, and send the partial data to a BBU by using a common public interface CPRI.

13. The apparatus according to claim 12, wherein that the processing module is configured to select the partial data in the received data, and send the partial data to the BBU by using the common public interface CPRI comprises:
the processing module is configured to select one group of receive antennas in the N groups of receive antennas, and send, by using the CPRI, data received by the group of receive antennas to the BBU.

14. The apparatus according to claim 12, wherein that the processing module is configured to select the partial data in the received data, and send the partial data to the BBU by using the common public interface CPRI comprises:
the processing module is configured to select a pilot signal in the data received on the N groups of receive antennas, and send the pilot signal to the BBU by using the CPRI; and the processing module is configured to select one group of receive antennas in the N groups of receive antennas, and send, by using the CPRI, a data signal in data received by the group of receive antennas to the BBU.

15. The apparatus according to claim 12, wherein that the processing module is configured to select the partial data in the received data, and send the partial data to the BBU by using the common public interface CPRI comprises:
the processing module is configured to select, in a polling manner, the partial data in the data received by the N groups of receive antennas, and send the partial data to the BBU by using the CPRI.

16. The apparatus according to claim 15, wherein that the processing module is configured to select, in a polling manner, the partial data in the data received by the N groups of receive antennas, and send the partial data to the BBU by using the CPRI comprises:
the processing module is configured to sequentially number the N groups of receive antennas starting from 0; group, by an integral quantity of data symbols, data signals in data received by each group of receive antennas, and sequentially number the groups starting from 0; group, by one pilot symbol, pilot signals in the data received by each group of receive antennas, and sequentially number the groups starting from 0; and
the processing module is further configured to: when polling the N groups of receive antennas for an n^{th} time, select an n^{th} group of data signals in data received by an m^{th} antenna group, send the n^{th} group of data signals to the BBU by using the CPRI, select an n^{th} group of pilot signals in the data received by the m^{th} antenna group, and send the n^{th} group of pilot signals to the BBU by using the CPRI, wherein
m is a remainder obtained when n is divided by N, and the n^{th} time starts from a 0^{th} time.

17. The apparatus according to claim 15, wherein that the processing module is configured to select, in a polling manner, the partial data in the data received by the N groups of receive antennas, and send the partial data to the BBU by using the CPRI comprises:
the processing module is configured to select a pilot signal in the data received by the N groups of receive antennas, and transmit the pilot signal to the BBU by using the CPRI;
the processing module is further configured to sequentially number the N groups of receive antennas starting from 0, group, by an integral quantity of data symbols, data signals in the data received on the N groups of receive antennas, and sequentially number the groups starting from 0; and
the processing module is further configured to: when polling the N groups of receive antennas for an n^{th} time, select an n^{th} group of data signals in data received by an m^{th} antenna group, and send the n^{th} group of data signals to the BBU by using the CPRI.

18. A data transmission apparatus, comprising:
a receiving module, configured to receive, by using a common public interface CPRI, downlink data sent by a BBU, wherein the data is data obtained after the BBU performs channel coding processing, or data obtained after the BBU performs channel coding processing and constellation mapping processing; and
a processing module, configured to perform modulation and intermediate radio frequency processing on the data.

19. The apparatus according to claim 18, wherein when the data is data obtained after the BBU performs channel coding processing,
that the processing module is configured to perform modulation on the data comprises:
the processing module is configured to perform constellation mapping processing, multiple-antenna multiple-input multiple-output MIMO coding processing, and orthogonal frequency division multiplexing OFDM symbol generation processing on the data.

20. The apparatus according to claim 18, wherein when the data is data obtained after the BBU performs channel coding processing and constellation mapping processing,
that the processing module is configured to perform modulation on the data comprises:
the processing module is configured to perform MIMO coding processing and OFDM symbol generation processing on the data.

21. A data transmission apparatus, comprising:
a processing module, configured to perform channel coding processing on downlink data; and
a sending module, configured to send the processed data to an RRU by using a common public interface CPRI, so that the RRU performs modulation and intermediate radio frequency processing on the data.

22. The apparatus according to claim 20, wherein the apparatus comprises:
the processing module is further configured to perform constellation mapping processing on downlink data obtained after channel coding processing is performed; and
that the sending module is configured to send the processed data to the RRU by using the common public interface CPRI is specifically: the sending module is configured to send data, obtained after the channel coding processing and the constellation mapping processing are performed, to the RRU by using the common public interface CPRI.
